# EUROPÄISCHE PATENTSCHRIFT

(11) **EP 3 582 668 B1**
(45) Veröffentlichungstag und Bekanntmachung des Hinweises auf die Patenterteilung: **21.04.2021**
(21) Anmeldenummer: 17717392.9
(22) Anmeldetag: 11.04.2017
(51) Int. Cl.: A47L 5/36, A47L 9/16

(54) **ANORDNUNG AUS PARTIKELAUFFANGBEHÄLTER UND ZYKLONVORABSCHEIDER**
ARRANGEMENT COMPRISING A PARTICLE RECEPTACLE AND A CYCLONIC SEPARATOR
ARRANGEMENT COMPRENANT UN COLLECTEUR À PARTICULES ET UN SÉPARATEUR CYCLONIQUE

(43) Veröffentlichungstag der Anmeldung: 25.12.2019
(73) Patentinhaber: Festool GmbH, 73240 Wendlingen (DE)
(72) Erfinder: GREBING, Gerhard, 72622 Nürtingen (DE)
(74) Vertreter: Patentanwälte Magenbauer & Kollegen Partnerschaft mbB
(86) Internationale Anmeldenummer: PCT/EP2017/058692
(87) Internationale Veröffentlichungsnummer: WO 2018/188735

(56) Entgegenhaltungen:
- US-A- 3 570 222
- US-A- 4 036 346
- US-A1- 2005 132 676
- US-A1- 2008 041 421

## Beschreibung

Die Erfindung betrifft eine Anordnung, umfassend einen Partikelauffangbehälter und einen auf dem Partikelauffangbehälter aufgesetzten Zyklonvorabscheider, wobei der Partikelauffangbehälter einen rechteckigen Behälterboden und vier Behälter-Umfangswände aufweist, die sich von dem Behälterboden nach oben erstrecken und eine horizontale Außenkontur des Partikelauffangbehälters definieren, und wobei der Zyklonvorabscheider über einen Partikelauslass verfügt, der ausgebildet ist, Partikel, die in dem Zyklonvorabscheider abgeschieden werden, in den Partikelauffangbehälter auszugeben.

Die beschriebene Anordnung wird typischerweise als Abscheide-Vorstufe eines Sauggeräts betrieben. Der Zyklonvorabscheider ist dabei an das Sauggerät angeschlossen, so dass der von dem Sauggerät angesaugte Luftstrom zuerst den Zyklonvorabscheider und dann das Sauggerät durchläuft. Auf diese Weise kann erreicht werden, dass bereits im Zyklonvorabscheider ein Großteil der in dem Luftstrom enthaltenen Partikel abgeschieden wird, so dass weniger Partikel in das Sauggerät befördert werden. Dies ist insbesondere dann von Vorteil, wenn das Sauggerät über einen Beutel und/oder Filter verfügt, an dem Partikel abgeschieden werden und der bei einem bestimmten Füllgrad/Verschmutzungsgrad zu wechseln ist. Dadurch, dass ein Großteil der Partikel bereits von dem Zyklonvorabscheider aus dem Luftstrom entfernt werden, erfolgt die Füllung/Verschmutzung des Beutels/Filters langsamer, so dass er weniger häufig ausgewechselt werden muss bzw. länger genutzt werden kann. Die in dem Zyklonvorabscheider abgeschiedenen Partikel werden in den Partikelauffangbehälter ausgegeben und dort gesammelt.

Die beschriebene Anordnung aus Zyklonvorabscheider und Partikelauffangbehälter wird insbesondere im Handwerksbereich eingesetzt, wo sie als Abscheide-Vorstufe der dort gängigen Beutel-Sauggeräte betrieben wird, um den vorgenannten Vorteil einer längeren Nutzbarkeit des Beutels zu erzielen.

So ist beispielsweise von dem Unternehmen "Oneida Air Systems" unter der Produktbezeichnung "Ultimate Dust Deputy Kit" eine Anordnung aus einem Zyklonvorabscheider und einem Partikelauffangbehälter erhältlich. Der Zyklonvorabscheider kann an ein im Handwerksbereich gängiges Beutel-Sauggerät angeschlossen werden. Der Zyklonvorabscheider verfügt über eine kegelförmige Grundgestalt und ist über Schraubverbindungen an einer Abdeckung eines Partikelauffangbehälters anbringbar. Der Partikelauffangbehälter ist quaderförmig ausgestaltet und zur Aufnahme eines Plastikbeutels vorgesehen, in dem wiederum die von dem Zyklonvorabscheider abgeschiedenen Partikel gesammelt werden.

Die US 4 036 346 A beschreibt eine münzbetriebene Vakuumvorrichtung mit einem Gehäusemittel, das auf einem Grundstützmittel montiert ist, einem Vakuumleistungsmittel, das von dem Gehäusemittel umschlossen ist, einem Münzsteuermittel, das mit dem Vakuumleistungsmittel verbunden ist, um dessen Betrieb zu steuern, und einer Schlauchanordnung, die mit dem Vakuum-Leistungsmittel verbunden ist. Das Gehäusemittel besteht aus Glasfasermaterial mit einer Abdeckkopfanordnung und einer entfernbaren Behälteranordnung zur Aufnahme von Abfallmaterial. Das Vakuumleistungsmittel umfasst eine Filter- und Motoranordnung mit einem Paar von Vakuummotorelementen, die an einer Motorkopfstützanordnung angebracht sind, wobei die gesamte Einheit zu Wartungszwecken leicht entfernbar ist. Die Filter- und Motoranordnung umfasst eine Filteranordnung, die jedem Vakuummotorelement zugeordnet ist, um eine effiziente Filtration bereitzustellen. Das Münzsteuermittel umfasst eine Zeitmesseranordnung, die von einer Münze für einen vorbestimmten Zeitraum betätigt wird, um das Vakuumleistungsmittel zu erregen.

Eine Aufgabe der Erfindung besteht darin, die eingangs genannte Anordnung so zu verbessern, dass sie einfacher und effizienter verwendet werden kann. Die Aufgabe wird durch die im Kennzeichen des Anspruchs 1 angegebenen Merkmale gelöst. Erfindungsgemäß ist der Partikelauffangbehälter derart ausgestaltet, dass sich die durch die Behälter-Umfangswände definierte horizontale Außenkontur zu dem Behälterboden hin verjüngt und der Partikelauffangbehälter in einen identischen Partikelauffangbehälter stapelbar ist.

Dadurch, dass der Partikelauffangbehälter nach unten hin verjüngend ausgestaltet ist und in einen identischen Partikelauffangbehälter stapelbar ist, können mehrere Partikelauffangbehälter sehr platzeffizient in einem Stapel transportiert werden. Es ist daher möglich, in platzeffizienter Weise eine Mehrzahl von Partikelauffangbehältern zu dem Einsatzort der Anordnung mitzunehmen, so dass die Partikelauffangbehälter insgesamt ausreichend Auffangvolumen bereitstellen, um die von dem Zyklonvorabscheider abgeschiedenen Partikel zu sammeln. Auf die vorstehend genannten, im Stand der Technik verwendeten Plastikbeutel kann dann verzichtet werden und die abgeschiedenen Partikel können direkt in den Partikelauffangbehältern gesammelt werden. Die erfindungsgemäße Anordnung kann daher einfacher und effizienter verwendet werden.

Mit dem Merkmal, dass der Partikelauffangbehälter in einen identischen Partikelauffangbehälter stapelbar ist, ist gemeint, dass der Partikelauffangbehälter mit mindestens 50%, insbesondere mindestens 70%, seiner vertikalen Abmessung bzw. vertikalen Erstreckung in einen baugleichen Partikelauffangbehälter eingesetzt werden kann. Ferner ist mit diesem Merkmal insbesondere gemeint, dass wenigstens drei identische Partikelauffangbehälter derart ineinander stapelbar sind, dass sie zusammen einen stabilen vertikalen Stapel bilden können.

Das Merkmal, dass die Behälter-Umfangswände eine horizontale Außenkontur definieren, soll insbesondere bedeuten, dass die Behälter-Umfangswände die seitliche Außenwandung des Partikelauffangbehälters bereitstellen und somit seine Außenkontur mitbestimmen.

Die beschriebene Form des Partikelauffangbehälters - nämlich dass sich die durch die Behälter-Umfangswände definierte horizontale Außenkontur nach unten hin verjüngt - wird nachstehend auch "konisch" genannt. Insbesondere verjüngt sich die horizontale Außenkontur stetig und/oder bis zum Behälterboden und/oder über die gesamte vertikale Erstreckung des Partikelauffangbehälters.

Zweckmäßigerweise handelt es sich bei dem Zyklonvorabscheider um eine rein passive Vorrichtung. Insbesondere benötigt der Zyklonvorabscheider für die Abscheidung von Partikeln keine Stromversorgung. Vorzugsweise verfügt der Zyklonvorabscheider über keine eigene Saugeinheit.

Vorteilhafte Ausgestaltungen sind Gegenstand der Unteransprüche.

Vorzugsweise umfasst die Anordnung einen zu dem Partikelauffangbehälter identisch ausgebildeten Zusatz-Partikelauffangbehälter. Zweckmäßigerweise ist der Partikelauffangbehälter in den Zusatz-Partikelauffangbehälter gestapelt. Im gestapelten Zustand können die Partikelauffangbehälter einfach und platzeffizient zu dem Einsatzort transportiert werden. Wenn der Partikelauffangbehälter mit abgeschiedenen Partikeln gefüllt ist, kann der Zyklonvorabscheider von dem gefüllten Partikelauffangbehälter abgenommen werden und auf den Zusatz-Partikelauffangbehälter aufgesetzt werden, so dass die weiteren abgeschiedenen Partikel in dem Zusatz-Partikelauffangbehälter gesammelt werden.

Vorzugsweise ist der Partikelauffangbehälter per Spritzguss hergestellt. Zweckmäßigerweise ist auch der Zusatz-Partikelauffangbehälter per Spritzguss hergestellt. Die Herstellung per Spritzguss wird insbesondere durch die vorstehend erläuterte konische Ausgestaltung des Partikelauffangbehälters ermöglicht. Durch die Herstellung per Spritzguss ist der Partikelauffangbehälter günstiger herstellbar und kann insgesamt weniger massiv ausgestaltet sein, sodass er leichter zu tragen ist.

Vorzugsweise sind die Wandebenen der vier Behälter-Umfangswände von dem Normalvektor des Behälterbodens weg geneigt. Zweckmäßigerweise bilden die Behälter-Umfangswände zusammen die Form eines umgedrehten Pyramidenstumpfmantels. Folglich tragen alle vier Behälter-Umfangswände zu der sich nach unten hin verjüngenden horizontalen Außenkontur bei.

Vorzugsweise ist der Zyklonvorabscheider mit seiner Unterseite auf die Oberseite des Partikelauffangbehälters aufgesetzt. Insbesondere befindet sich die horizontale Außenkontur der Oberseite des Partikelauffangbehälters innerhalb der horizontalen Außenkontur der Unterseite des Zyklonvorabscheiders. Auf diese Weise kann der Zyklonvorabscheider direkt auf die zweckmäßigerweise offen ausgestaltete Oberseite des Partikelauffangbehälters aufgesetzt werden. Die im Stand der Technik verwendete Abdeckung zwischen Zyklonvorabscheider und Partikelauffangbehälter wird daher nicht benötigt. Ferner ist ein derartiger, in seiner horizontalen Außenkontur kleiner als der Zyklonvorabscheider ausgestalteter Partikelauffangbehälter gut handhabbar und transportierbar.

Vorzugsweise verfügt der Partikelauffangbehälter über Behälter-Kopplungsmittel. Bei den Behälter-Kopplungsmitteln handelt es sich insbesondere um nicht-bewegliche Behälter-Kopplungsmittel. Die Behälter-Kopplungsmittel sind an zwei gegenüberliegenden Behälter-Umfangswänden, insbesondere an zwei längsseitigen Behälter-Umfangswänden, angeordnet. Die Behälter-Kopplungsmittel stehen mit unteren Gehäuse-Kopplungsmitteln des Zyklonvorabscheiders in Eingriff, um eine lösbare, vertikal zugfeste Kopplung zwischen dem Partikelauffangbehälter und dem Zyklonvorabscheider bereitzustellen. Dadurch, dass die Behälter-Kopplungsmittel nicht-bewegliche Kopplungsmittel sind, kann der Partikelauffangbehälter einfach und kostengünstig hergestellt werden.

Der Ausdruck "lösbare Kopplung" soll insbesondere eine Kopplung bezeichnen, die werkzeuglos und reversibel hergestellt und gelöst werden kann, beispielsweise eine Kopplung unter Beteiligung eines manuell betätigbaren Drehriegels oder einer manuell betätigbaren Verriegelungslasche. Mit dem Ausdruck "vertikal zugfeste Kopplung" soll insbesondere eine in Vertikalrichtung kraftübertragende Kopplung gemeint sein, die zweckmäßigerweise bei den im Gebrauch bzw. beim Transport des Zyklonvorabscheiders auftretenden vertikalen Kräften stabil bleibt. Im Kontext des Zyklonvorabscheiders und des Partikelauffangbehälters soll mit "vertikal zugfester Kopplung" insbesondere eine Kopplung gemeint sein, die es ermöglicht, durch Anheben des Zyklonvorabscheider einen an den Zyklonvorabscheider vertikal zugfest gekoppelten Partikelauffangbehälter mitanzuheben. Zweckmäßigerweise handelt es sich bei einer "vertikal zugfeste Kopplung" um eine Kopplung, die in mehrere, vorzugsweise in alle, Raumrichtungen zugfest bzw. stabil kraftübertragend ist.

Vorzugsweise weisen die Behälter-Umfangswände einen oberen Rand auf. Zweckmäßigerweise ist an dem oberen Rand eine umlaufende Dichtung befindlich. Durch die Dichtung kann eine luftdichte Kopplung zwischen dem Zyklonvorabscheider und dem Partikelauffangbehälter erzielt werden, wodurch im Betrieb die Saugleistung verbessert wird.

Vorzugsweise weist der Partikelauffangbehälter an zwei gegenüberliegenden Umfangswänden, insbesondere zwei stirnseitigen Umfangswänden, Behälter-Griffe auf. Mithilfe der Behälter-Griffe ist der Partikelauffangbehälter besonders gut tragbar.

Vorzugsweise sind die Behälter-Griffe als Abstandshalter ausgebildet, die in einem Zustand, in dem der Partikelauffangbehälter in einen identischen Partikelauffangbehälter gestapelt ist, einen vorbestimmten vertikalen Abstand zwischen den beiden Oberseiten der ineinander gestapelten Partikelauffangbehälter gewährleisten. Auf diese Weise wird erreicht, dass ineinander gestapelte Partikelauffangbehälter leicht voneinander getrennt bzw. abgenommen werden können.

Vorzugsweise verfügen die Behälter-Griffe über Horizontalstege und Vertikalstege. Zweckmäßigerweise sind die Behälter-Griffe derart ausgebildet, dass, in einem Zustand, in dem der Partikelauffangbehälter in einen identischen Partikelauffangbehälter gestapelt ist, untere Kanten der Vertikalstege auf der Oberseite des identischen Partikelauffangbehälters aufliegen und so den vorbestimmten vertikalen Abstand gewährleisten. Derartige Behälter-Griffe sind einfach und günstig herstellbar.

Vorzugsweise umfasst die Anordnung einen bügelförmigen Tragegriff, der in einem Zustand, in dem der Zyklonvorabscheider von dem Partikelauffangbehälter abgenommen ist, an den Behälter-Griffen des Partikelauffangbehälters anbringbar ist. Mithilfe eines solchen bügelförmigen Tragegriffs kann der Partikelauffangbehälter einhändig getragen werden.

Vorzugsweise verfügt der Partikelauffangbehälter an der Unterseite des Behälterbodens über zwei Tragevertiefungen. Insbesondere dann, wenn der Partikelauffangbehälter aufgrund seiner Füllung besonders schwer ist, bietet es sich an, den Partikelauffangbehälter an seinem Behälterboden zu tragen. Bei der beschriebenen Ausgestaltung mit Tragevertiefungen kann die tragende Person mit ihren Fingern in die Tragevertiefungen greifen, um so den Partikelauffangbehälter besser halten zu können.

Vorzugsweise verfügt die Anordnung über einen Behälter-Deckel, der in einem Zustand, in dem der Zyklonvorabscheider von dem Partikelauffangbehälter abgenommen ist, auf den Partikelauffangbehälter aufgesetzt werden kann. Zweckmäßigerweise ist an der Oberseite des Behälter-Deckels eine Vertiefung vorgesehen, die in Entsprechung zu dem Behälterboden des Partikelauffangbehälters ausgestaltet ist, so dass ein identischer Partikelauffangbehälter stabil auf den Behälter-Deckel gestapelt werden kann. Werden, wie vorstehend erwähnt, mehrere Partikelauffangbehälter verwendet, so können diese im gefüllten Zustand mit dem Deckel-Behälter verschlossen werden und für den Abtransport oder die Lagerung aufgrund der vorgesehenen Vertiefung im Deckel stabil aufeinander gestapelt werden.

Vorzugsweise ist der Behälter-Deckel derart ausgestaltet, dass er in einen identischen Behälter-Deckel stapelbar ist. Folglich ist es möglich, mehrere Behälter-Deckel ineinander gestapelt und damit platzeffizient zu transportieren und zu verstauen.

Vorzugsweise stimmen die Außenmaße der Oberseite des Behälter-Deckels mit den Außenmaßen der Oberseite des Zyklonvorabscheiders überein. Auf diese Weise wird der Transport eines mit dem Behälter-Deckel verschlossenen Partikelauffangbehälters zusammen mit dem Zyklonvorabscheider und/oder zusammen mit Systemkisten, die dieselben Außenmaße wie der Zyklonvorabscheider aufweisen, erleichtert.

Exemplarische Ausführungsformen werden nachstehend unter Bezugnahme auf die Zeichnung erläutert. Dabei zeigt
- Figur 1: eine Anordnung aus einem Partikelauffangbehälter und einem darauf aufgesetzten Zyklonvorabscheider,
- Figur 2: zwei ineinander gestapelte Partikelauffangbehälter,
- Figur 3: einen Partikelauffangbehälter mit aufgesetztem Behälter-Deckel,
- Figur 4: einen Partikelauffangbehälter mit angebrachtem Tragegriff,
- Figur 5: einen Partikelauffangbehälter mit Tragevertiefungen,
- Figur 6: den Zyklonvorabscheider von unten,
- Figur 7: eine Anordnung aus einem Zyklonvorabscheider, einem Partikelauffangbehälter und einer Saugvorrichtung und
- Figur 8: eine Anordnung aus einem kistenförmigen Körper, einem Zyklonvorabscheider und einem Partikelauffangbehälter.

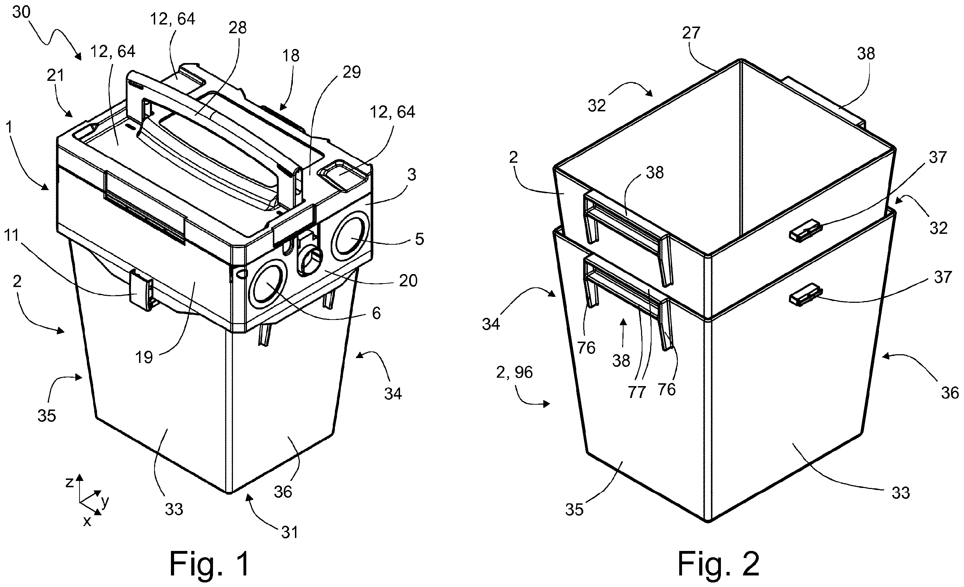

Wie in der Figur 1 gezeigt, erstreckt sich die Anordnung 30, die den Zyklonvorabscheider 1 und den Partikelauffangbehälter 2 umfasst, in eine Vertikalrichtung, die parallel zu der eingezeichneten z-Achse verläuft, in eine Längsrichtung, die parallel zu der eingezeichneten x-Achse verläuft, und in eine Querrichtung, die parallel zu der eingezeichneten y-Achse verläuft. Die x-Achse, y-Achse und z-Achse sind orthogonal zueinander ausgerichtet.

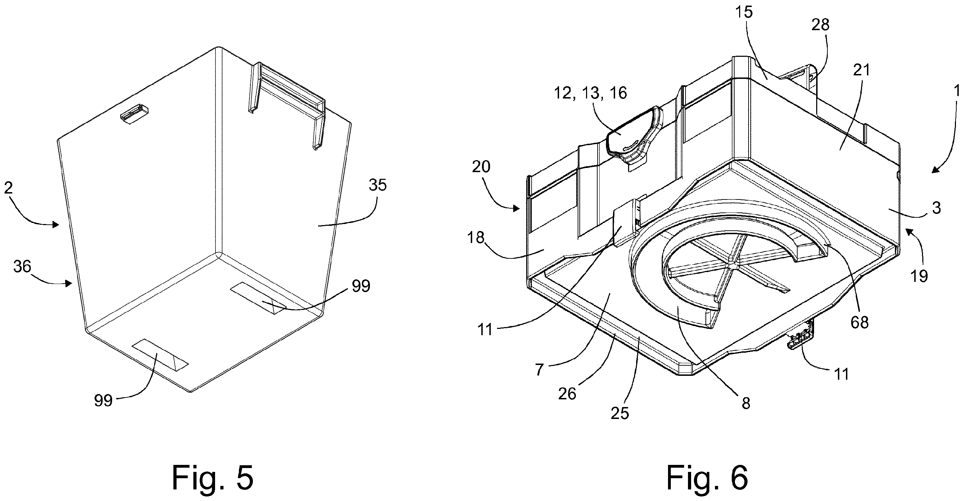

Der Zyklonvorabscheider 1 ist auf den Partikelauffangbehälter 2 aufgesetzt. Der Partikelauffangbehälter 2 weist einen rechteckigen Behälterboden 31 und vier Behälter-Umfangswände 33, 34, 35, 36 auf. Die Behälter-Umfangswände 33, 34, 35, 36 erstrecken sich von dem Behälterboden 31 nach oben und definieren eine horizontale Außenkontur des Partikelauffangbehälters 2. Der Zyklonvorabscheider 1 verfügt über einen Partikelauslass 8, der ausgebildet ist, in dem Zyklonvorabscheider abgeschiedene Partikel in den Partikelauffangbehälter 2 auszugeben. Der Partikelauslass 8 ist in der Figur 6 gezeigt. Die durch die Behälter-Umfangswände 33, 34, 35, 36 definierte horizontale Außenkontur verjüngt sich zu dem Behälterboden 31 hin und der Partikelauffangbehälter 2 ist in einen identischen Partikelauffangbehälter 2 stapelbar.

Der Partikelauffangbehälter 2 kann somit in einem Stapel mit weiteren baugleichen Partikelauffangbehältern 2, 96 transportiert und verstaut werden. Dadurch wird die Anordnung 30 einfacher und effizienter verwendbar, da es möglich ist, mit wenig zusätzlichem Platzaufwand mehrere Partikelauffangbehälter 2 mitzuführen und diese beispielsweise als Wechselbehälter für den Zyklonvorabscheider 1 einzusetzen.

Nachstehend werden exemplarische Konfigurationen der Anordnung 30, des Partikelauffangbehälters 2, des Zyklonvorabscheiders 1 und weiterer Anordnungen 40, 60 sowie deren Komponenten diskutiert.

Die Figur 1 zeigt die Anordnung 30 in einem Zustand, in dem der Zyklonvorabscheider 1 auf dem Partikelauffangbehälter 2 aufgesetzt ist und mithilfe von unteren Gehäuse-Kopplungsmittel 11 vertikal zugfest mit dem Partikelauffangbehälter 2 verbunden ist. Der Zyklonvorabscheider 1 sitzt mit seiner Unterseite 7 bzw. einer an der Unterseite 7 angeordneten Rinne 25 auf dem Partikelauffangbehälter 2 auf. Die Unterseite 7 ist in der Figur 6 gezeigt. Die horizontale Außenkontur der Oberseite 32 des Partikelauffangbehälters 2 befindet sich innerhalb der horizontalen Außenkontur der Unterseite 7 des Zyklonvorabscheiders 1; d.h., der Zyklonvorabscheider 1 ragt in alle Horizontalrichtungen über die Behälter-Umfangswände 33, 34, 35, 36 hinaus. Die vertikale Erstreckung des Partikelauffangbehälters 2 ist größer als die vertikale Erstreckung des Zyklonvorabscheiders 1. Vorzugsweise ist der Partikelauffangbehälter 2 doppelt so hoch oder mehr als doppelt so hoch wie der Zyklonvorabscheider 1.

Die Figur 2 zeigt den Partikelauffangbehälter 2, wie er in einen identischen Partikelauffangbehälter 2 gestapelt ist. Der identische Partikelauffangbehälter 2 wird auch als Zusatz-Partikelauffangbehälter 96 bezeichnet.

Wie in der Figur 2 zu sehen, ist die Oberseite 32 des Partikelauffangbehälters 2 komplett offen; d.h. die Oberseite 32 wird von dem oberen Rand 27 der Behälter-Umfangswände 33, 34, 35, 36 gebildet. Die Höhe des Partikelauffangbehälters 2 ist exemplarisch größer als seine Länge und größer als seine Breite. Zweckmäßigerweise ist die Breite des Partikelauffangbehälters 2 geringer als seine Länge.

Der Partikelauffangbehälter 2 und insbesondere der Behälterboden 31 sind derart ausgestaltet, dass der Partikelauffangbehälter 2 mit dem Behälterboden 31 stabil auf eine ebene Unterlage gestellt werden kann, insbesondere auch dann, wenn der Zyklonvorabscheider 1 auf dem Partikelauffangbehälter 2 aufgesetzt ist.

Die Behälter-Umfangswände 33 und 34 sind parallel zur Längsrichtung ausgerichtet und werden auch als längsseitige Behälter-Umfangswände 33, 34 bezeichnet. Die Behälter-Umfangswände 35 und 36 sind parallel zu der Querrichtung ausgerichtet und werden auch als stirnseitige Umfangswände 35, 36 bezeichnet.

Exemplarisch sind die Wandebenen der vier Behälter-Umfangswände 33, 34, 35, 36 von dem Normalvektor des Behälterbodens 31 weg geneigt. Zweckmäßigerweise bilden die Behälter-Umfangswände 33, 34, 35, 36 zusammen die Form eines umgedrehten Pyramidenstumpfmantels. Folglich tragen alle vier Behälter-Umfangswände 33, 34, 35, 36 zu der sich nach unten hin verjüngenden horizontalen Außenkontur bei.

Exemplarisch verfügt der Partikelauffangbehälter 2 über Behälter-Kopplungsmittel 37. Bei den Behälter-Kopplungsmitteln 37 handelt es sich insbesondere um nicht-bewegliche Behälter-Kopplungsmittel. Die Behälter-Kopplungsmittel 37 sind an zwei gegenüberliegenden Behälter-Umfangswänden 33, 34, insbesondere an den zwei längsseitigen Behälter-Umfangswänden 33, 34, angeordnet. Die Behälter-Kopplungsmittel 37 können mit den unteren Gehäuse-Kopplungsmitteln 11 des Zyklonvorabscheiders 1 in Eingriff gebracht werden, um die lösbare, vertikal zugfeste Kopplung zwischen dem Partikelauffangbehälter 2 und dem Zyklonvorabscheider 1 bereitzustellen.

Bei den Behälter-Kopplungsmitteln 37 handelt es sich zweckmäßigerweise um stegförmige Vorsprünge. Die Behälter-Kopplungsmittel 37 sind vorzugsweise mit ihrer Längsachse parallel zur Längsrichtung ausgerichtet und in Längsrichtung insbesondere mittig an den längsseitigen Behälter-Umfangswänden 33, 34 angeordnet. Ferner befinden sich die Behälter-Kopplungsmittel 37 zweckmäßigerweise im Bereich der Oberseite 32 des Partikelauffangbehälters 2. Exemplarisch sind die Behälter-Kopplungsmittel 37 von dem oberen Rand 32 vertikal beabstandet. Die als stegförmige Vorsprünge ausgebildeten Behälter-Kopplungsmittel 37 können auch als Funktionskanten bezeichnet werden.

Exemplarisch weist der Partikelauffangbehälter 2 ferner an zwei gegenüberliegenden Behälter-Umfangswände 35, 36, insbesondere zwei stirnseitigen Behälter-Umfangswände 35, 36, Behälter-Griffe 38 auf. Die Behälter-Griffe können gegriffen werden, um den Partikelauffangbehälter 2 anzuheben und zu tragen. Die Behälter-Griffe 38 sind im Bereich der Oberseite 32 angeordnet. Exemplarisch schließen die Behälter-Griffe 38 bündig mit der Oberseite 32 ab.

Exemplarisch sind die Behälter-Griffe 38 als Abstandshalter ausgebildet, die in einem Zustand, in dem der Partikelauffangbehälter 2 in einen identischen Partikelauffangbehälter 2 gestapelt ist, einen vorbestimmten vertikalen Abstand zwischen den beiden Oberseiten 32 der ineinander gestapelten Partikelauffangbehälter gewährleisten.

Exemplarisch verfügen die Behälter-Griffe 38 über Horizontalstege 77 und Vertikalstege 76. Die Vertikalstege 76 sind zwischen den zueinander beabstandeten Horizontalstegen 77 angeordnet. Der obere Horizontalsteg 77 schließt bündig mit der Oberseite 32 des Partikelauffangbehälters 2 ab. Zweckmäßigerweise sind die Behälter-Griffe 38 derart ausgebildet, dass, in einem Zustand, in dem der Partikelauffangbehälter 2 in einen identischen Partikelauffangbehälter 2 gestapelt ist, untere Kanten der Vertikalstege 76 auf der Oberseite 32 des identischen Partikelauffangbehälters 2 aufliegen und so den vorbestimmten vertikalen Abstand gewährleisten. In der Figur 2 liegen die unteren Kanten der Vertikalstege 76 noch nicht auf der Oberseite 32 des unteren Partikelauffangbehälters 2 auf, so dass der obere Partikelauffangbehälter 2 hier noch weiter in den unteren Partikelauffangbehälter 2 geschoben werden.

Der Partikelauffangbehälter 2 und der Zusatz-Partikelauffangbehälter 96 sind exemplarisch per Spritzguss hergestellt.

Zweckmäßigerweise ist an dem oberen Rand 27 eine umlaufende Dichtung befindlich. Zweckmäßigerweise wird der obere Rand 27 durch die umlaufende Dichtung gebildet. Die Dichtung ist insbesondere aus elastischem Material gefertigt und kann beispielsweise an die Behälter-Umfangswände 33, 34, 35, 36 angespritzt sein. Alternativ oder zusätzlich dazu kann die umlaufende Dichtung auch an dem Zyklonvorabscheider 1, insbesondere in der Rinne 25 angebracht sein. In diesem Fall ist die umlaufende Dichtung dann an dem Rand 27 befindlich, wenn der Zyklonvorabscheider 1 auf dem Partikelauffangbehälter 2 aufgesetzt ist.

Die Wandflächen der Behälter-Umfangswände 33, 34, 35, 36 sind exemplarisch im Wesentlichen eben ausgebildet. Vorzugsweise sind die Wandflächen der Behälter-Umfangswände 33, 34, 35, 36 bis auf die Behälter-Kopplungsmittel 37 und die Behälter-Griffe 38 eben ausgebildet. An den eben ausgebildeten Wandflächen können beispielsweise ein oder mehrere Maskierungslabel angebracht sein. Zweckmäßigerweise kann der Partikelauffangbehälter 2 ferner über ein Fach verfügen, beispielsweise in einer der Behälter-Umfangswände 33, 34, 35, 36, das zur Aufnahme und/oder Befestigung eines Ortungsmoduls ausgebildet ist. Bei dem Ortungsmodul kann es sich beispielsweise um ein Bluetooth- und/oder ein GPS-Modul handeln. Zweckmäßigerweise ist das Ortungsmodul in dem Fach angeordnet.

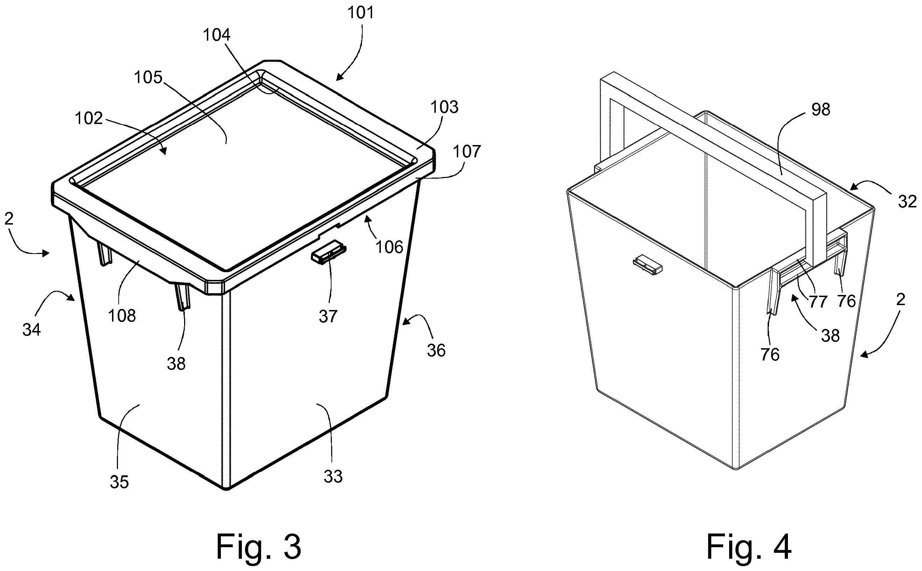

Die Figur 3 zeigt den Partikelauffangbehälter 2 mit einem auf die offene Oberseite 32 aufgesetzten Behälter-Deckel 101. Der Behälter-Deckel 101 verschließt den Partikelauffangbehälter 2 vollständig. Exemplarisch ist an der Deckel-Oberseite 103 des Behälter-Deckels 101 eine Deckel-Vertiefung 102 vorgesehen. Zweckmäßigerweise ist die Deckel-Vertiefung 102 in Entsprechung zu dem Behälterboden 31 des Partikelauffangbehälters 2 ausgestaltet, so dass ein identischer Partikelauffangbehälter 2 stabil auf den Behälter-Deckel 101 gestapelt werden kann. Vorzugsweise ist der Behälter-Deckel 101 derart ausgestaltet, dass er in einen identischen Behälter-Deckel 101 stapelbar ist. Vorzugsweise stimmen die horizontalen Außenmaße des Behälter-Deckels 101 mit den horizontalen Außenmaßen der Oberseite 29 des Zyklonvorabscheiders 1 überein.

Der Vertiefungs-Boden 105 der Behälter-Vertiefung 102 ist exemplarisch rechteckig ausgestaltet und über eine umlaufende, sich von dem Vertiefungs-Boden 105 nach oben erstreckende Vertiefungs-Seitenwand 104 mit der Deckel-Oberseite 103 verbunden. Von der Deckel-Oberseite 103 erstreckt sich eine umlaufende Deckel-Seitenwand 107 nach unten. Zwischen der Vertiefungs-Seitenwand 104 und der Deckel-Seitenwand 107 ist eine Deckel-Rinne 106 ausgebildet, die zur Aufnahme des oberen Rands 27 des Partikelauffangbehälters 2 dient. In der Deckel-Rinne 106 ist vorzugsweise eine umlaufende Dichtung vorgesehen, die insbesondere aus elastischem Material gefertigt ist. Vorzugsweise ist sowohl die Vertiefungs-Seitenwand 104 als auch die Deckel-Seitenwand relativ zu dem Normalvektor des Vertiefungs-Bodens geneigt, um so eine möglichst platzeffiziente Stapelung von identischen Behälter-Deckeln 101 zu ermöglichen. Insbesondere verjüngt sich die durch die Deckel-Seitenwand 107 definierte horizontale Außenkontur nach oben zu der Deckel-Oberseite 103 hin. Zweckmäßigerweise verjüngt sich die durch die Vertiefungs-Seitenwand 104 definierte horizontale Innenkontur nach unten zu dem Vertiefungsboden 105 hin. Die Deckel-Vertiefung 102 ist insbesondere derart ausgestaltet, dass ein Partikelauffangbehälter 2 stabil in die Deckel-Vertiefung 102 gestellt werden kann und dabei von der Vertiefungs-Seitenwand 104 umgeben und stabilisiert wird.

Die Deckel-Seitenwand 107 ist insbesondere derart ausgestaltet, dass sie die Behälter-Griffe 38 zumindest teilweise abdeckt und somit schützt. Zu diesem Zweck verfügt die Deckel-Seitenwand 107 stirnseitig jeweils über einen nach unten ragenden Wandabschnitt 108. Ferner ist die Deckel-Seitenwand 107 zweckmäßigerweise derart ausgestaltet, dass die längsseitigen Umfangswände 33, 34 des Partikelauffangbehälters 2 und beispielsweise dort angebrachte Markierungslabel insbesondere vor Bewitterung geschützt werden.

Der Behälter-Deckel 101 kann ferner längsseitig an der Deckel-Oberseite 103 über Verzurr-Vertiefungen verfügen, die in der Figur 3 nicht gezeigt sind. Die Verzurr-Vertiefungen können in Längsrichtung mittig angeordnet sein - sich in Längsrichtung also im Bereich der Behälter-Kopplungsmittel 37 befinden. Zweckmäßigerweise sind die Verzurr-Vertiefungen ausgebildet, einen quer über den Behälter-Deckel verlaufenden Verzurr-Gurt zu führen bzw. zu halten.

Die Figur 4 zeigt den Partikelauffangbehälter 2 mit einem bügelförmigen Tragegriff 98. Der Tragegriff 98 weist insbesondere die Form eines umgedrehten U auf. Der Tragegriff 98 ist exemplarisch an den Behälter-Griffen 38, insbesondere an den Horizontalstegen 77, angebracht. Vorzugsweise ist der Tragegriff 98 durch eine Rast- und/oder Klemmverbindung an den Behälter-Griffen 38 angebracht, so dass er insbesondere werkzeuglos von den Behälter-Griffen 38 gelöst bzw. wieder an diese angebracht werden kann. Der Tragegriff 38 verläuft in Längsrichtung über die offene Oberseite 32 des Partikelauffangbehälters 2.

Die Figur 5 zeigt den Partikelauffangbehälter 2 von unten. Der Partikelauffangbehälter 2 ist hier an seinem Behälterboden 31 exemplarisch mit zwei Tragevertiefungen 99 ausgestattet. Die Tragevertiefungen 99 sind insbesondere im Bereich der stirnseitigen Umfangswände 35, 36 angeordnet. Die Tragevertiefungen 99 sind insbesondere derart ausgebildet, dass eine den Partikelauffangbehälter 2 tragende Person mit ihren Fingern in die Tragevertiefungen 99 greifen kann.

Die Figur 6 zeigt den Zyklonvorabscheider 1 von unten. Der Zyklonvorabscheider 1 umfasst ein kistenförmiges Gehäuse 3. Mit dem Begriff "kistenförmig" ist insbesondere eine im Wesentlichen quaderförmige Gestalt gemeint. Ferner ist mit "kistenförmig" eine Form gemeint, deren Oberseite derart ausgestaltet ist, dass ein weiterer kistenförmiger oder quaderförmiger Körper, insbesondere eine Systemkiste, auf die Oberseite aufstapelbar ist. Beispielsweise ist mit "kistenförmig" eine Form gemeint, deren Oberseite und Umfangswände orthogonal zueinander ausgerichtet sind. Aufgrund seiner kistenförmigen Ausgestaltung lässt sich der Zyklonvorabscheider in einem Stapel aus weiteren kistenförmigen Körpern, wie beispielsweise Systemkisten, unterbringen und transportieren.

Die Höhe des Zyklonvorabscheiders 1 ist exemplarisch geringer als seine Breite und geringer als seine Länge. Zweckmäßigerweise ist die Breite des Zyklonvorabscheiders 1 geringer als seine Länge. Beispielsweise ist der Zyklonvorabscheider 1 zwischen 390 mm und 400 mm, insbesondere 396 mm, lang und zwischen 290 mm und 300 mm, insbesondere 296 mm breit. Vorzugsweise beträgt die Höhe des Zyklonvorabscheiders 1 mit eingeklapptem Tragegriff 28 weniger als 200 mm. Die horizontalen Außenmaße der Oberseite 32 des Partikelauffangbehälters 2 sind dementsprechend insbesondere geringer als 396 mm (in Längsrichtung) und/oder geringer als 296 mm (in Querrichtung).

Das Gehäuse 3 des Zyklonvorabscheiders 1 weist vier orthogonal zueinander ausgerichtete Umfangswände 18, 19, 20, 21 auf. Die Umfangswände 18, 19 sind längsseitige Umfangswände und die Umfangswände 20, 21 sind stirnseitige Umfangswände.

Das Gehäuse 3 verfügt über untere Gehäuse-Kopplungsmittel 11. Die unteren Gehäuse-Kopplungsmittel 11 umfassen exemplarisch zwei beweglich gelagerte Verriegelungselemente und sind an den längsseitigen Umfangswänden 18, 19 des Gehäuses 3 vorgesehen. Zweckmäßigerweise sind die Verriegelungselemente in Längsrichtung mittig an den längsseitigen Umfangswänden 18, 19 angeordnet. Die Verriegelungselemente sind insbesondere als Verriegelungslaschen ausgebildet, die schwenkbeweglich und/oder verschiebbar gelagert sind.

An der Unterseite 7 des Zyklonvorabscheiders 1 ist der Partikelauslass 8 angeordnet, der exemplarisch als Ringspalt bzw. Ringabschnittsspalt ausgebildet ist. Zweckmäßigerweise ist der Partikelauslass 8 von einem vertikal nach unten abstehenden Rand 68 umgeben.

An der Unterseite 7 ist ferner die Rinne 25 vorgesehen, die entlang des äußeren Rands 26 der Unterseite 7 verläuft und zur Aufnahme des oberen Rands 27 des Partikelauffangbehälters 2 ausgebildet ist. Die Rinne 25 umläuft den Partikelauslass 8 vollständig und hat insgesamt einen rechteckigen Verlauf. Der äußere Rand 26 der Unterseite wird exemplarisch von den unteren Kanten der Umfangswände 18, 19, 20, 21 gebildet.

Das Gehäuse 3 umfasst einen Deckel 15, der sich über die gesamte horizontale Ausdehnung des Zyklonvorabscheiders 1 erstreckt. Der Deckel 15 ist verschwenkbar angelenkt. In der Offenstellung gibt der verschwenkbare Deckel 15 einen Zugang zu den inneren Komponenten des Zyklonvorabscheiders 1 frei, so dass diese gereinigt und gewartet werden können.

Am Deckel 15 ist ferner ein Tragegriff 28 vorgesehen. Im gezeigten Beispiel ist der Tragegriff 28 an der Oberseite 29 des Deckels 15 angeordnet. Der Tragegriff 28 ist in vorteilhafter Weise so ausgebildet, dass er wahlweise eine an die Oberseite 29 des Deckels 15 herangeschwenkte Nichtgebrauchsstellung einnehmen kann oder eine nach oben geschwenkte und folglich nach oben über die Oberseite 29 hinausragende Gebrauchsstellung einnehmen kann. Es handelt sich vorzugsweise um einen Tragegriff 28 mit U-förmiger Gestalt.

Der Zyklonvorabscheider 1 verfügt über einen Lufteinlass 5 und einen Luftauslass 6, die exemplarisch an derselben Umfangswand, insbesondere an der stirnseitigen Umfangswand 20, angeordnet sind.

Der Zyklonvorabscheider 1 nutzt das bekannte Funktionsprinzip eines Zyklonabscheiders bzw. eines Fliehkraftabscheiders. Bei anliegendem Unterdruck an dem Luftauslass 6 wird ein Luftstrom durch den Lufteinlass 5 eingesaugt, durchläuft einen nicht gezeigten Einlaufzylinder und wird über den Luftauslass 6 ausgegeben. Der Einlaufzylinder ist derart ausgebildet, dass der Luftstrom auf eine kreisförmige Bahn gelenkt wird, wobei in dem Luftstrom enthaltene Partikel durch die Fliehkraft an Wände des Einlaufzylinders geschleudert werden, so dass sie abgebremst werden und schließlich aus dem Partikelauslass 8 ausgegeben werden.

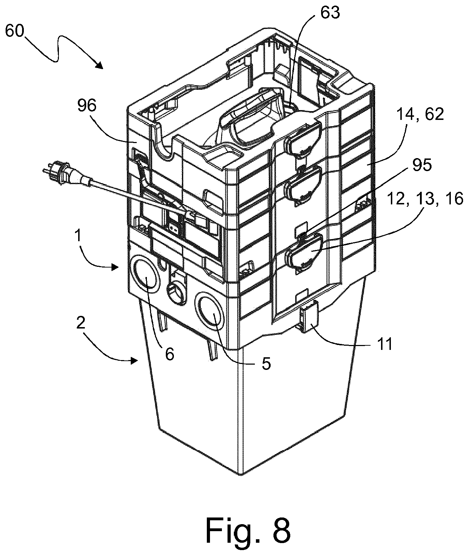

Das Gehäuse 3 verfügt exemplarisch über obere Gehäuse-Kopplungsmittel 12, die ein beweglich gelagertes Verriegelungselement 13 umfassen. Die oberen Gehäuse-Kopplungsmittel 12 sind dazu ausgebildet, in einem Zustand, in dem ein kistenförmiger Körper 14 auf das Gehäuse 3 gestapelt ist, eine lösbare, vertikal zugfeste Kopplung mit dem kistenförmigen Körper 14 bereitzustellen. Ein solcher Zustand, in dem ein kistenförmiger Körper 14 auf das Gehäuse 3 gestapelt ist, ist zum Beispiel in der Figur 8 gezeigt. Vorzugsweise sind die oberen Gehäuse-Kopplungsmittel 12 dazu geeignet, eine in mehrere, insbesondere sämtliche Raumrichtungen zugfeste Kopplung bereitzustellen.

Das beweglich gelagerte Verriegelungselement 13 ist exemplarisch als Drehriegel 16 ausgebildet. Zweckmäßigerweise ist das Verriegelungselement 13 an der längsseitigen Umfangsseite 18 angeordnet.

Exemplarisch weisen die die oberen Gehäuse-Kopplungsmittel 12 ferner Eingriffsstrukturen 64 auf, die dazu geeignet sind, mit entsprechenden Eingriffsstrukturen, wie beispielsweise Standfüßen einer Systemkiste, in Eingriff gebracht zu werden. Die Eingriffsstrukturen 64 sind an der Oberseite 29 vorgesehen und zweckmäßigerweise als Eingriffsvertiefungen ausgebildet. Die Eingriffsstrukturen 64 sind zweckmäßigerweise statische Strukturen - also nicht-beweglich Strukturen. Zweckmäßigerweise sind die Eingriffsstrukturen 64 derart ausgebildet, dass sie zu einer vertikalen und/oder horizontalen Kopplung beitragen können. Beispielsweise können die Eingriffsstrukturen 64 hierfür Hintergreifbestandteile aufweisen.

Der Zyklonvorabscheider 1 gleicht insbesondere in Bezug auf seine quaderförmige Grundgestalt, seine oberen Gehäuse-Kopplungsmittel 12 und der Ausgestaltung seiner Oberseite 29 einer Systemkiste. Systemkisten eines Systems verfügen über eine in dem System definierte Grundfläche und weisen in dem System definierte Kopplungsmittel auf bzw. sind mit einem bestimmten Kopplungssystem kompatibel, so dass Systemkisten eines Systems zu einem stabilen Stapel zusammengesetzt werden können. Systemkisten sind beispielsweise als modulare Werkzeugkästen zur Aufbewahrung von handgeführtem Elektrowerkzeug, Zubehör und/oder Verbrauchmaterialen weit verbreitet. Da zumindest die quaderförmige Grundgestalt, die oberen Gehäuse-Kopplungsmittel 12 und die Oberseite 29 des Zyklonvorabscheiders 1 wie bei einer Systemkiste ausgebildet sind, kann der Zyklonvorabscheider 1 das unterste Stapelelement eines Stapels aus Systemkisten bilden und so effizient verstaut und transportiert werden.

Der vorstehend bereits erwähnte Drehriegel 16 ist an dem Deckel 15 angeordnet. Der Drehriegel 16 ist sowohl zur Verriegelung des Deckels 15 als auch zur Bereitstellung der Kopplung mit einem auf dem Zyklonvorabscheider 1 angeordneten kistenförmigen Körper 14 ausgebildet. Der Drehriegel 16 weist insbesondere eine T-förmige Gestalt auf und kann zweckmäßigerweise in wenigstens drei verschiedene Stellungen versetzt werden: eine erste Stellung, in der der Deckel 15 nicht verriegelt ist und eine Kopplung zu einem aufgesetzten kistenförmigen Körper 14 bereitgestellt werden kann, eine zweite Stellung, in der der Deckel 15 verriegelt ist und keine Kopplung zu einem aufgesetzten kistenförmigen Körper 14 bereitgestellt werden kann, und eine dritte Stellung, in der der Deckel 15 verriegelt ist und eine Kopplung zu einem aufgesetzten kistenförmigen Körper 14 bereitgestellt werden kann.

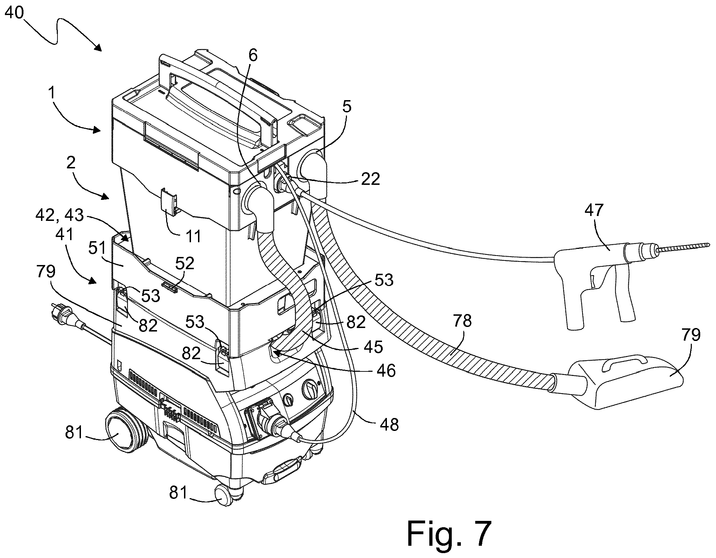

Die Figur 7 zeigt eine Anordnung 40 aus dem Zyklonvorabscheider 1, dem Partikelauffangbehälter 2 und einer Saugvorrichtung 41. Der Zyklonvorabscheider 1 ist auf dem Partikelauffangbehälter 2 aufgesetzt und mithilfe der unteren Gehäuse-Kopplungsmittel 11 und der Behälter-Kopplungsmittel 37 vertikal zugfest an den Partikelauffangbehälter 2 gekoppelt. Der Partikelauffangbehälter 2 ist wiederum in eine Behälter-Aufnahme 43 eingesetzt, die an der Oberseite 42 der Saugvorrichtung 41 vorgesehen ist. Die Saugvorrichtung 41 verfügt über einen Sauganschluss 46 und ist ausgebildet, an diesem Sauganschluss 46 einen Unterdruck bereitzustellen. Der Sauganschluss 46 ist über einen Schlauch 45 mit dem Luftauslass 6 verbunden. An dem Lufteinlass 5 ist ein Saugschlauch 78 mit einem Saugkopf 79 angeschlossen. Bei der Saugvorrichtung 41 handelt es sich zweckmäßigerweise um eine Beutel-Saugvorrichtung und/oder eine Filter-Saugvorrichtung. Wird die Saugvorrichtung 41 eingeschaltet und beginnt zu saugen, so wird durch den Saugkopf 79 und den Saugschlauch 78 ein Luftstrom in den Zyklonvorabscheider 1 eingesaugt. Dort wird ein Anteil der in dem Luftstom befindlichen Partikeln abgeschieden und in den Partikelauffangbehälter 2 befördert. Der Luftstrom wird über den Luftauslass 6 ausgegeben und gelangt durch den Schlauch 45 und den Sauganschluss 46 in die Saugvorrichtung 41. Dort durchläuft der Luftstrom beispielsweise einen Beutel und/oder einen Filter, wo die zu diesem Zeitpunkt noch im Luftstrom enthaltenen Partikel abgeschieden werden. Dadurch, dass bereits ein Anteil der Partikel in dem Zyklonvorabscheider 1 abgeschieden wurde, gelangen weniger Partikel in den Beutel bzw. Filter, so dass der Beutel bzw. Filter weniger häufig gewechselt werden muss.

Die Saugvorrichtung 41 umfasst exemplarisch ein Sauggerät 79 und einen auf dem Sauggerät 79 aufgesetzten Adapterrahmen 51. Die Behälter-Aufnahme 43 ist in dem Adapterrahmen 51 vorgesehen.

Das Sauggerät 79 ist exemplarisch als Mobilsauger ausgebildet und verfügt über Fahrrollen 81, mit denen das Sauggerät 79 verfahrbar ist.

Das Sauggerät 79 verfügt über Sauggerät-Kopplungsmittel 82, die mit unteren Adapterrahmen-Kopplungsmitteln 53 gekoppelt sind. Exemplarisch umfassen die Sauggerät-Kopplungsmitteln 82 beweglich gelagerte Verriegelungslaschen und die unteren Adapterrahmen-Kopplungsmitteln 53 umfassen Verriegelungsvorsprünge.

Die in der Figur 7 gezeigte Anordnung 40 umfasst ferner ein Elektrogerät 47, beispielsweise ein Elektrowerkzeug, das an einer Steckdose 22 des Zyklonvorabscheiders 1 angeschlossen ist. Die Steckdose 22 ist wiederum über ein Anschlusskabel 48 an dem Sauggerät 79 angeschlossen. Das Sauggerät 79 ist exemplarisch ausgebildet, ein Einschalten des Elektrowerkzeugs 47 zu erfassen und in Ansprechen darauf beginnen zu saugen.

Der Adapterrahmen 51 verfügt exemplarisch über obere Adapterrahmen-Kopplungsmittel 52, die eine lösbare, vertikal zugfeste Kopplung mit dem Zyklonvorabscheider 1, insbesondere mit den als Verriegelungslaschen ausgebildeten unteren Gehäuse-Kopplungsmitteln 11 des Zyklonvorabscheiders, 1 bereitstellen können. Der Zyklonvorabscheider 1 kann somit zum Transport direkt an dem Adapterrahmen 51 angebracht werden. Bei den Adapterrahmen-Kopplungsmittel 52 handelt es sich insbesondere um nicht-bewegliche Adapterrahmen-Kopplungsmittel, zweckmäßigerweise um stegförmige Vorsprünge.

Die Figur 8 zeigt eine Anordnung 60, die den Zyklonvorabscheider 1, den Partikelauffangbehälter 2 sowie einen kistenförmigen Körper 14 umfasst. Der Zyklonvorabscheider 1 ist auf dem Partikelauffangbehälter 2 aufgesetzt. Der kistenförmige Körper 14 ist auf dem Zyklonvorabscheider 1 angeordnet und bildet zusammen mit dem Zyklonvorabscheider 1 einen vertikalen, im Wesentlichen quaderförmigen Stapel. Der kistenförmige Körper 14 verfügt über untere Körper-Kopplungsmittel 95, die mit den oberen Gehäuse-Kopplungsmitteln 12 zusammenwirken können, um eine lösbare, vertikal zugfeste Kopplung zwischen dem kistenförmigen Körper 14 und dem Zyklonvorabscheider 1 bereitzustellen. Insbesondere umfassen die unteren Körper-Kopplungsmittel 95 einen Verriegelungsvorsprung sowie nicht gezeigte, an der Unterseite des kistenförmigen Körpers 14 angeordnete Eingriffsvorsprünge.

Bei dem kistenförmigen Körper 14 handelt es sich insbesondere um eine Systemkiste. Zweckmäßigerweise weist der kistenförmige Körper 14 eine Saugeinrichtung 62 und einen Sauganschluss 63 auf. Bei der Saugeinrichtung 62 handelt es sich zweckmäßigerweise um eine Beutel- und/oder Filter-Saugeinrichtung. Der Sauganschluss 63 kann über einen nicht gezeigten Schlauch mit dem Luftauslass 6 des Zyklonvorabscheiders 1 verbunden werden, so dass mittels der Saugeinrichtung 62 der für den Betrieb des Zyklonvorabscheiders 1 benötigte Unterdruck bereit gestellt werden kann. Im gezeigten Beispiel ist auf dem kistenförmigen Körper 14 ferner ein kistenförmiges Schlauchdepot 96 aufgesetzt.

## Patentansprüche

1. Anordnung (30), umfassend einen Partikelauffangbehälter (2) und einen auf dem Partikelauffangbehälter (2) aufgesetzten Zyklonvorabscheider (1), wobei der Partikelauffangbehälter (2) einen rechteckigen Behälterboden (31) und vier Behälter-Umfangswände (33, 34, 35, 36) aufweist, die sich von dem Behälterboden (31) nach oben erstrecken und eine horizontale Außenkontur des Partikelauffangbehälters (2) definieren, und wobei der Zyklonvorabscheider (1) über einen Partikelauslass (8) verfügt, der ausgebildet ist, Partikel, die in dem Zyklonvorabscheider (1) abgeschieden werden, in den Partikelauffangbehälter (2) auszugeben, wobei sich die durch die Behälter-Umfangswände (33, 34, 35, 36) definierte horizontale Außenkontur zu dem Behälterboden (31) hin verjüngt und der Partikelauffangbehälter (2) in einen identischen Partikelauffangbehälter (2) stapelbar ist.

2. Anordnung nach Anspruch 1, umfassend einen zu dem Partikelauffangbehälter (2) identisch ausgestalteten Zusatz-Partikelauffangbehälter (96), wobei der Partikelauffangbehälter (2) zweckmäßigerweise in den Zusatz-Partikelauffangbehälter (96) gestapelt ist.

3. Anordnung (30) nach Anspruch 1 oder 2, **dadurch gekennzeichnet, dass** der Partikelauffangbehälter (2) per Spritzguss hergestellt ist.

4. Anordnung (30) nach einem der voranstehenden Ansprüche, **dadurch gekennzeichnet, dass** die Wandebenen der vier Behälter-Umfangswände (33, 34, 35, 36) von dem Normalvektor des Behälterbodens (31) weg geneigt sind, so dass die Behälter-Umfangswände (33, 34, 35, 36) zusammen die Form eines umgedrehten Pyramidenstumpfmantels bilden.

5. Anordnung (30) nach einem der voranstehenden Ansprüche, **dadurch gekennzeichnet, dass** der Zyklonvorabscheider (1) mit seiner Unterseite (7) auf die Oberseite (32) des Partikelauffangbehälters (2) aufgesetzt ist, wobei sich die horizontale Außenkontur der Oberseite (32) des Partikelauffangbehälters (2) innerhalb der horizontalen Außenkontur der Unterseite (7) des Zyklonvorabscheiders (1) befindet.

6. Anordnung (30) nach einem der voranstehenden Ansprüche, **dadurch gekennzeichnet, dass** der Partikelauffangbehälter (2) über Behälter-Kopplungsmittel (37), insbesondere nicht-bewegliche Behälter-Kopplungsmittel, verfügt, die an zwei gegenüberliegenden Behälter-Umfangswänden (33, 34) angeordnet sind und mit unteren Gehäuse-Kopplungsmitteln (11) des Zyklonvorabscheiders (1) in Eingriff stehen, um eine lösbare, vertikal zugfeste Kopplung zwischen dem Partikelauffangbehälter (2) und dem Zyklonvorabscheider (1) bereitzustellen.

7. Anordnung (30) nach einem der voranstehenden Ansprüche, **dadurch gekennzeichnet, dass** die Behälter-Umfangswände (33, 34, 35, 36) einen oberen Rand (27) aufweisen, an dem eine umlaufende Dichtung befindlich ist.

8. Anordnung (30) nach einem der voranstehenden Ansprüche, **dadurch gekennzeichnet, dass** der Partikelauffangbehälter (2) an zwei gegenüberliegenden Umfangswänden (35, 36) Behälter-Griffe (38) aufweist.

9. Anordnung (30) nach Anspruch 8, **dadurch gekennzeichnet, dass** die Behälter-Griffe (38) als Abstandshalter ausgebildet sind, die in einem Zustand, in dem der Partikelauffangbehälter (2) in einen identischen Partikelauffangbehälter (2) gestapelt ist, einen vorbestimmten vertikalen Abstand zwischen den beiden Oberseiten (32) der ineinander gestapelten Partikelauffangbehälter (2) gewährleisten.

10. Anordnung (30) nach Anspruch 9, **dadurch gekennzeichnet, dass** die Behälter-Griffe (38) über Horizontalstege (77) und Vertikalstege (76) verfügen und derart ausgebildet sind, dass, in einem Zustand, in dem der Partikelauffangbehälter (2) in einen identischen Partikelauffangbehälter (2) gestapelt ist, untere Kanten (97) der Vertikalstege (76) auf der Oberseite (32) des identischen Partikelauffangbehälters (2) aufliegen und so den vorbestimmten vertikalen Abstand gewährleisten.

11. Anordnung nach einem der Ansprüche 8 bis 10, ferner umfassend einen bügelförmigen Tragegriff (98), der in einem Zustand, in dem der Zyklonvorabscheider (1) von dem Partikelauffangbehälter (2) abgenommen ist, an den Behälter-Griffen (38) des Partikelauffangbehälters (2) anbringbar ist.

12. Anordnung nach einem der voranstehenden Ansprüche, **dadurch gekennzeichnet, dass** der Partikelauffangbehälter (2) an der Unterseite des Behälterbodens (31) zwei Tragevertiefungen (99) aufweist.

13. Anordnung nach einem der voranstehenden Ansprüche, ferner umfassend einen Behälter-Deckel (101), der in einem Zustand, in dem der Zyklonvorabscheider (1) von dem Partikelauffangbehälter (2) abgenommen ist, auf den Partikelauffangbehälter (2) aufgesetzt werden kann, wobei an der Oberseite des Behälter-Deckels (101) eine Vertiefung (102) vorgesehen ist, die in Entsprechung zu dem Behälterboden (31) des Partikelauffangbehälters (2) ausgestaltet ist, so dass ein identischer Partikelauffangbehälter (2) stabil auf den Behälter-Deckel (101) gestapelt werden kann.

14. Anordnung nach Anspruch 13, **dadurch gekennzeichnet, dass** der Behälter-Deckel (101) derart ausgestaltet ist, dass er in einen identischen Behälter-Deckel stapelbar ist.

15. Anordnung (30) nach Anspruch 13 oder 14, **dadurch gekennzeichnet, dass** die horizontalen Außenmaße des Behälter-Deckels (101) mit den horizontalen Außenmaßen der Oberseite (103) des Zyklonvorabscheiders (1) übereinstimmen.

## Claims

1. Assembly (30) comprising a particle collecting container (2) and a cyclone pre-separator (1) placed on the particle collecting container (2), wherein the particle collecting container (2) has a rectangular container bottom (31) and four container peripheral walls (33, 34, 35, 36) which extend upwards from the container bottom (31) and define a horizontal outer contour of the particle collecting container (2), and wherein the cyclone pre-separator (1) has a particle outlet (8) which is designed to dispense particles which have been separated in the cyclone pre-separator (1) into the particle collecting container (2), wherein the horizontal outer contour defined by the container peripheral walls (33, 34, 35, 36) tapers towards the container bottom (31) and the particle collecting container (2) can be stacked into an identical particle collecting container (2).

2. Assembly according to claim 1, comprising an additional particle collecting container (96) identical to the particle collecting container (2), wherein the particle collecting container (2) is expediently stacked in the additional particle collecting container (96).

3. Assembly (30) according to claim 1 or 2, **characterised in that** the particle collecting container (2) is produced by injection moulding.

4. Assembly (30) according to any one of the preceding claims, **characterised in that** the wall planes of the four container peripheral walls (33, 34, 35, 36) are inclined away from the normal vector of the container bottom (31) so that container peripheral walls (33, 34, 35, 36) together make the shape of an inverted truncated pyramid periphery.

5. Assembly (30) according to any one of the preceding claims, **characterised in that** the cyclone pre-separator (1) is positioned with its underside (7) on the upper side (32) of the particle collecting container (2), wherein the horizontal outer contour of the upper side (32) of the particle collecting container (2) is positioned within the horizontal outer contour of the underside (7) of the cyclone pre-separator 1.

6. Assembly (30) according to any one of the preceding claims, **characterised in that** the particle collecting container (2) has container couplers (37), in particular non-movable container couplers, arranged on two opposing container peripheral walls (33, 34) and can engage with lower housing couplers (11) of the cyclone pre-separator (1), in order to provide a releasable, vertically tension-proof coupling between the particle collecting container (2) and the cyclone pre-separator (1).

7. Assembly (30) according to any one of the preceding claims, **characterised in that** the container peripheral walls (33, 34, 35, 36) have an upper edge (27) on which a surrounding seal is arranged.

8. Assembly (30) according to any one of the preceding claims, **characterised in that** the particle collecting container (2) has container handles (38) on two opposing container peripheral walls (35, 36).

9. Assembly (30) according to claims 8, **characterised in that** the container handles (38) are designed as spacers which when the particle collecting container (2) is stacked in an identical particle collecting container (2), ensure a predetermined vertical distance between the two upper surfaces (32) of the inter-stacked particle collecting containers (2).

10. Assembly (30) according to claim 9, **characterised in that** the container handles (38) have horizontal bars (77) and vertical bars (76) and are designed so that when the particle collecting container (2) is stacked in an identical particle collecting container (2), lower edges (97) of the vertical bars (76) rest on the upper surface (32) of the identical particle collecting containers (2) thereby ensuring the specified vertical distance.

11. Assembly according to any one of claims 8 to 10, further comprising a bow-shaped carrying handle (98) which when the cyclone pre-separator (1) is removed from the particle collecting container (2) can be attached to the container handles (38) of the particle collecting container (2).

12. Assembly according to any one of the preceding claims, **characterised in that** the particle collecting container (2) has on the underside of the container bottom (31) carrying indentations (99).

13. Assembly according to any one of the preceding claims, further comprising a container cover (101), which when the cyclone pre-separator (1) is removed from the particle collecting container (2), can be positioned on the particle collecting container (2), wherein on the upper side of the container cover (101) an indentation (102) is provided, designed to correspond with the container bottom (31) of the particle collecting container (2) so that an identical particle collecting container (2) can be stacked on the container cover (101) in a stable manner.

14. Assembly according to claim 13, **characterised in that** the container cover (101) is designed so that it can be stacked in an identical container cover.

15. Assembly (30) according to claim 13 or 14, **characterised in that** the horizontal external dimensions of the container cover (101) correspond to the horizontal external dimensions of the upper side (103) of the cyclone pre-separator (1).

## Revendications

1. Ensemble (30), comprenant un collecteur à particules (2) et un séparateur préalable cyclonique (1) placé sur le collecteur à particules (2), dans lequel le collecteur à particules (2) présente un fond de collecteur (31) rectangulaire et quatre parois périphériques de collecteur (33, 34, 35, 36), qui s'étendent depuis le fond de collecteur (31) vers le haut et définissent un contour extérieur horizontal du collecteur à particules (2), et dans lequel le séparateur préalable cyclonique (1) dispose d'une sortie de particules (8) qui est réalisée pour distribuer dans le collecteur à particules (2) des particules qui sont séparées dans le séparateur préalable cyclonique (1), dans lequel le contour extérieur horizontal défini par les parois périphériques de collecteur (33, 34, 35, 36) se rétrécit en direction du fond de collecteur (31) et le collecteur à particules (2) peut être empilé dans un collecteur à particules (2) identique.

2. Ensemble selon la revendication 1, comprenant un collecteur à particules supplémentaire (96) configuré de manière identique au collecteur à particules (2), dans lequel le collecteur à particules (2) est empilé de manière opportune dans le collecteur à particules supplémentaire (96).

3. Ensemble (30) selon la revendication 1 ou 2, **caractérisé en ce que** le collecteur à particules (2) est fabriqué par coulée par injection.

4. Ensemble (30) selon l'une quelconque des revendications précédentes, **caractérisé en ce que** les plans de paroi des quatre parois périphériques de collecteur (33, 34, 35, 36) sont inclinés de manière à s'éloigner du vecteur normal du fond de collecteur (31) de sorte que les parois périphériques de collecteur (33, 34, 35, 36) forment conjointement la forme d'une enveloppe en pyramide tronquée retournée.

5. Ensemble (30) selon l'une quelconque des revendications précédentes, **caractérisé en ce que** le séparateur préalable cyclonique (1) est placé par son côté inférieur (7) sur le côté supérieur (32) du collecteur à particules (2), dans lequel le contour extérieur horizontal du côté supérieur (32) du collecteur à particules (2) se trouve à l'intérieur du contour extérieur horizontal du côté inférieur (7) du séparateur préalable cyclonique (1).

6. Ensemble (30) selon l'une quelconque des revendications précédentes, **caractérisé en ce que** le collecteur à particules (2) dispose de moyens de couplage de collecteur (37), en particulier de moyens de couplage de collecteur non mobiles, qui sont disposés sur deux parois périphériques de collecteur (33, 34) se faisant face et sont en prise avec des moyens de couplage de boîtier inférieurs (11) du séparateur préalable cyclonique (1) pour fournir un couplage amovible, résistant à la traction verticalement entre le collecteur à particules (2) et le séparateur préalable cyclonique (1).

7. Ensemble (30) selon l'une quelconque des revendications précédentes, **caractérisé en ce que** les parois périphériques de collecteur (33, 34, 35, 36) présentent un bord supérieur (27), sur lequel se trouve un joint d'étanchéité périphérique.

8. Ensemble (30) selon l'une quelconque des revendications précédentes, **caractérisé en ce que** le collecteur à particules (2) présente des poignées de collecteur (38) sur deux parois périphériques (35, 36) se faisant face.

9. Ensemble (30) selon la revendication 8, **caractérisé en ce que** les poignées de collecteur (38) sont réalisées en tant qu'écarteurs, qui garantissent un espacement vertical prédéfini entre les deux côtés supérieurs (32) des collecteurs à particules (2) empilés l'un dans l'autre dans un état, dans lequel le collecteur à particules (2) est empilé dans un collecteur à particules (2) identique.

10. Ensemble (30) selon la revendication 9, **caractérisé en ce que** les poignées de collecteur (38) disposent d'entretoises horizontales (77) et d'entretoises verticales (76) et sont réalisées de telle manière que dans un état, dans lequel le collecteur à particules (2) est empilé dans un collecteur à particules (2) identique, des arêtes inférieures (97) des entretoises verticales (76) reposent sur le côté supérieur (32) du collecteur à particules (2) identique et garantissent ainsi la distance verticale prédéfinie.

11. Ensemble selon l'une quelconque des revendications 8 à 10, comprenant en outre une poignée de transport (98) en forme d'arceau, qui peut être installée sur les poignées de collecteur (38) du collecteur à particules (2) dans un état, dans lequel le séparateur préalable cyclonique (1) est retiré du collecteur à particules (2).

12. Ensemble selon l'une quelconque des revendications précédentes, **caractérisé en ce que** le collecteur à particules (2) présente sur le côté inférieur du fond de collecteur (31) deux renfoncements de transport (99).

13. Ensemble selon l'une quelconque des revendications précédentes, comprenant en outre un couvercle de collecteur (101) qui peut être placé sur le collecteur à particules (2) dans un état, dans lequel le séparateur préalable cyclonique (1) est retiré du collecteur à particules (2), dans lequel est prévu sur le côté supérieur du couvercle de collecteur (101) un renfoncement (102), qui est configuré de manière à correspondre au fond de collecteur (31) du collecteur à particules (2) de sorte qu'un collecteur à particules (2) identique peut être empilé de manière stable sur le couvercle de collecteur (101).

14. Ensemble selon la revendication 13, **caractérisé en ce que** le couvercle de collecteur (101) est configuré de telle manière qu'il peut être empilé dans un couvercle de collecteur identique.

15. Ensemble (30) selon la revendication 13 ou 14, **caractérisé en ce que** les dimensions extérieures horizontales du couvercle de collecteur (101) coïncident avec les dimensions extérieures horizontales du côté supérieur (103) du séparateur préalable cyclonique (1).
